# EUROPEAN PATENT SPECIFICATION

(11) **EP 3 846 013 B1**
(45) Date of publication and mention of the grant of the patent: **12.03.2025**
(21) Application number: 20181611.3
(22) Date of filing: 23.06.2020
(51) Int. Cl.: G06F 3/048, G06F 3/0482, G06F 9/451, G06F 9/54, G06F 40/10, H04M 1/2745, G06F 3/0481

(54) **METHOD FOR PROCESSING INFORMATION, ELECTRONIC DEVICE AND STORAGE MEDIUM**
VERFAHREN ZUR INFORMATIONSVERARBEITUNG, ELEKTRONISCHE VORRICHTUNG UND SPEICHERMEDIUM
PROCÉDÉ DE TRAITEMENT D'INFORMATIONS, DISPOSITIF ÉLECTRONIQUE ET SUPPORT D'ENREGISTREMENT

(30) Priority: 03.01.2020 CN 202010006410
(43) Date of publication of application: 07.07.2021
(73) Proprietor: Beijing Xiaomi Mobile Software Co., Ltd., Beijing 100085 (CN)
(72) Inventor: GUO, Tao, Haidian District, Beijing 100085 (CN)
(74) Representative: Gevers Patents

(56) References cited:
- CN-A- 106 453 773
- CN-A- 110 413 169
- US-A1- 2018 188 924
- US-A1- 2021 026 712

## Description

### CROSS-REFERENCE TO RELATED APPLICATION

The present application is based on and claims priority to Chinese patent application No. 202010006410.2 filed on January 03, 2020.

### TECHNICAL FIELD

The disclosure relates to the technical field of communications or smart electronic devices, and particularly to a method for processing information, an electronic device, and a storage medium.

### BACKGROUND

With rapid development and continuous popularization of electronic devices, such as mobile phones, laptops or computers, the electronic devices may be used to provide various services of information. For example, an electronic device may be used for information search and further operations, such as saving the information displayed in a corresponding display interface. However, currently, in order to perform information search and further operations, a display page corresponding to the information needs to be opened, and the information needs to be copied to the display page or manually input in the display page. As such, the operation is complicated and not user friendly.

Related technologies are known from CN 110413 169 A, CN 106 453 773 A and US 2018/188924 A1.

### SUMMARY

The present invention is defined in the independent claims, and the preferable features according to the present invention are defined in the independent claims.

Provided are a method and device for processing information, and a storage medium. According to a first aspect of the disclosure, provided is a method for processing according to claim 1.

In an example, the method further includes: jumping, according to the identification information, to the target interface of the functional scene to be entered associated with the first information in response to detecting a trigger operation on the second information.

In an example, displaying, in the specified interface, the second information associated with the first information includes: displaying the second information for a predetermined period of time after switching to the specified interface.

In an example, the method further includes one of: cancelling the display of the second information, in response to determining that a number of times that the second information is displayed in the specified interface is greater than a first threshold; or cancelling the display of the second information, in response to determining that a number of trigger operations on the second information is greater than or equal to a second threshold.

In an example, acquiring the identification information of the target interface of the functional scene to be entered associated with the first information includes: sending the first information to a server, and receiving, from the server, the identification information of the target interface of the functional scene to be entered associated with the first information, wherein the identification information is determined by the server based on the first information; or recognizing information content of the first information, determining, according to the information content, a type of the first information, determining, according to the type of the first information, the functional scene to be entered, and determining, according to the first information and the functional scene to be entered, the identification information of the target interface of the functional scene to be entered associated with the first information. with the first information.

In an example, displaying, in the specified interface, the second information of one of the plurality of functional scenes includes one of: displaying the second information of one functional scene that has been used most frequently among the plurality of functional scenes; or displaying the second information of one functional scene that is most recently used among the plurality of functional scenes.

In an example, displaying, in the specified interface, the second information of more than one of the plurality of functional scenes includes: displaying the second information of the more than one of the plurality of functional scenes in a polling manner.

In an example, the method further includes: displaying, in the target interface, the first information.

According to a second aspect of embodiments of the disclosure, provided is a device for processing information, according to claim 9.

In an example, the device further includes: a switching module, configured to: in response to detecting a trigger operation on the second information, jump, according to the identification information, to the target interface of the functional scene to be entered associated with the first information.

In an example, the display module is further configured to: after switching to the specified interface, display the second information for a predetermined period of time.

In an example, the device further includes a processing module, configured to: in response to determining that a number of times that the second information is displayed in the specified interface is greater than a first threshold, cancel the display of the second information; or in response to determining that a number of trigger operations on the second information is greater than or equal to a second threshold, cancel the display of the second information.

In an example, the acquisition module includes: a sending module, configured to send the first information to a server; and a receiving module, configured to receive, from the server, the identification information of the target interface of the functional scene to be entered associated with the first information, wherein the identification information is determined by the server based on the first information; or the acquisition module includes: a recognition module, configured to recognize information content of the first information; and a determination unit, configured to: determine, according to the information content, a type of the first information, determine, according to the type of the first information, the functional scene to be entered, and determine, according to the first information and the functional scene to be entered, the identification information of the target interface of the functional scene to be entered associated with the first information.

In an example, the display module is configured to: display the second information of one functional scene that has been used most frequently among the plurality of functional scene; or display the second information of one functional scene that is most recently used among the plurality of functional scenes.

In an example, the display module is configured to: display the second information of the more than one of the plurality of functional scenes in a polling manner.

According to a third aspect of the disclosure, provided is a computer program product according to claim 10.

The device can include a memory for storing processor-executable instructions, where the processor is configured to run the executable instructions to implement the method for processing information according to any embodiment of the disclosure.

According to a fourth aspect of the disclosure, provided is a computer-readable storage medium with an executable program stored thereon, according to claim 11.

The technical solutions provided in the embodiments of the disclosure may have the following beneficial effects.

In embodiments of the disclosure, after switching to a specified interface, first information in a clipboard is acquired, and second information is displayed in the specified interface, where the second information is entry information for opening a functional scene to be entered associated with the first information. As such, the entry information of the functional scene to be entered associated with the first information may be determined based on the first information, so as to facilitate a user to perform further operations based on the entry information. User experience is improved, and intelligence of an electronic device can be improved.

It is to be understood that the general description above and detailed description below are merely exemplary and explanatory, and are not intended to restrict the disclosure.

### BRIEF DESCRIPTION OF THE DRAWINGS

The accompanying drawings herein are incorporated into the specification and constitute part of the present specification, illustrate embodiments consistent with the disclosure and are intended for explaining the principles of the disclosure together with the specification.
FIG. 1 illustrates a flowchart of a method for processing information according to an exemplary embodiment.
FIG. 2 illustrates a schematic diagram of displaying second information according to an exemplary embodiment.
FIG. 3 illustrates a flowchart of a method for processing information according to an exemplary embodiment.
FIG. 4 illustrates a block diagram of a device for processing information according to an exemplary embodiment.
FIG. 5 illustrates a block diagram of a device for processing information according to an exemplary embodiment.
FIG. 6 illustrates a block diagram of an electronic device according to an exemplary embodiment.

### DETAILED DESCRIPTION

Detailed description will be made here to exemplary embodiments, examples of which are illustrated in the accompanying drawings. When drawings are referred to in the following description, identical numerals in different drawings refer to identical or similar elements, unless otherwise indicated. Implementations described in the following exemplary embodiments do not mean all the implementations consistent with the disclosure. On the contrary, they are merely examples of apparatuses and methods consistent with some aspects of the disclosure detailed in the appended claims.

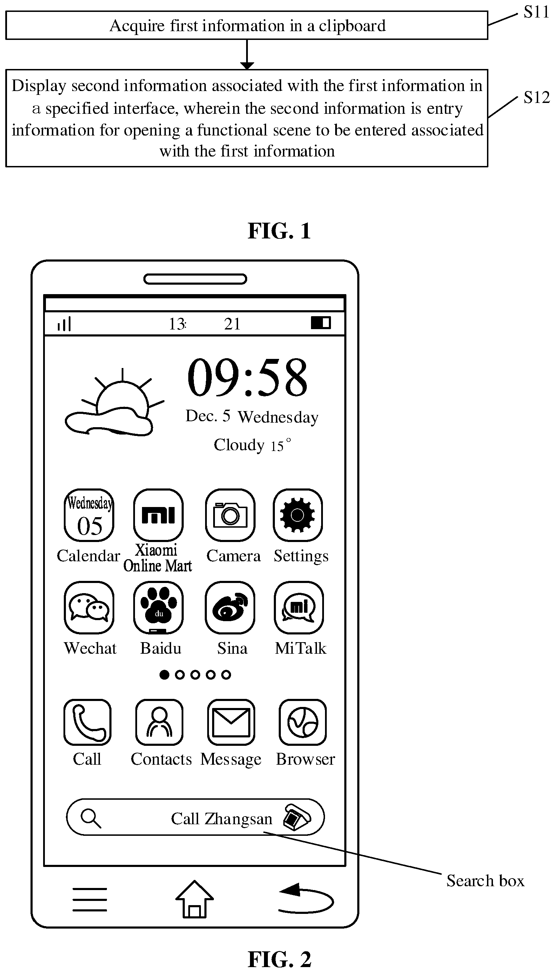

FIG. 1 illustrates a flowchart of a method for processing information according to an exemplary embodiment. As illustrated in FIG. 1, the method includes steps S11 and S12. In step S11, first information in a clipboard is acquired.

In step S12, second information associated with the first information is displayed in a specified interface. The second information is entry information for opening a functional scene to be entered associated with the first information.

The method for processing information according to embodiments of the disclosure is applied to an electronic device. The electronic device includes, but is not limited to, at least one of a mobile phone, a tablet, a laptop, a smart device, a computer, and the like.

Here, the specified interface is a desktop. Of course, the specified interface may also be a Hiboard, or the like, or an interface of any application (APP) in the electronic device, an interface of any webpage, or the like. The specified interface may also be a communication interface for instant communication. The only condition is that the specified interface is switched from another display interface.

In an embodiment, the step S11 includes acquiring the first information in the clipboard if it is determined that the display interface has been switched to the specified interface. In particular, when the electronic device returns to the specified interface, a reading operation is triggered. The first information in the buffer space is acquired based on the reading operation. It is to be understood that, in other embodiments, the clipboard may be a buffer area in a memory of the electronic device. The buffer area is used for buffering data.

In an embodiment, the step S12 includes acquiring the second information corresponding to the functional scene determined by the first information, if it is determined that the first information is different from information read from the clipboard last time. As such, in the embodiment, the second information is acquired only if the first information in the clipboard contains new content. Therefore, there is no need to repeatedly determine the functional scene based on the first information and determine the corresponding second information based on the functional scene.

Here, the first information may include, but is not limited to, at least one of a name, a phone number, a website address, a Taobao command, and the like. The first information may also include text in a specific format or text in an unspecific format. For example, the text in a specific format may be a phone number, a website address, or the like, and the text in an unspecific format may be a paragraph of prose, a piece of news, or the like.

The functional scene includes, but is not limited to, at least one of an address book scene, a dialing scene, a parcel sending scene, a Wechat scene, a webpage browsing scene, a novel reading scene, a mobile phone board game scene, a shopping scene, and the like.

In embodiments of the disclosure, the second information is associated with the first information. In particular, if one or more functional scenes may be determined based on the first information, the second information is entry information of target interfaces corresponding to the one or more functional scenes.

For example, if the first information includes a name and a phone number, the determined functional scene may be an address book scene or a dialing scene, and the second information is entry information of the address book scene or the dialing scene. For another example, if the first information includes a name, a phone number and an address, the determined functional scene may be a parcel sending scene, and the second information is entry information of the parcel sending scene. For another example, if the first information includes a Wechat name card, the determined functional scene is a Wechat functional scene, and the second information is entry information of the Wechat functional scene. For another example, if the first information includes a paragraph of novel text, the determined functional scenes may be a webpage browsing scene or a novel reading scene, and the second information is entry information of the webpage browsing scene or the novel reading scene.

Here, the entry information is associated with a functional scene to be entered. The entry information includes text information and/or picture information.

Here, the text information may include, but is not limited to, at least one of the name of the functional scene, the name of a target interface corresponding to the functional scene, or prompt information of switching to the target interface. Here, the picture information may be a picture of the target interface corresponding to the functional scene.

For example, the text information may be: "Wechat" in text, prompt information of switching to a homepage of Alipay, prompt information of jumping to a parcel sending applet, and the like. For another example, if the functional scene is Wechat, the picture information may be an icon of the Wechat APP.

Before step S12, the method further includes acquiring identification information of a target interface of the functional scene to be entered associated with the first information. Here, the identification information is a uniform resource identifier (URI) of the target interface. The URI uniquely identifies the target interface.

Step S12 includes displaying, in a search box at the specified interface, the second information associated with the first information. The specified interface includes a desktop.

Step S12 includes displaying, in a search box at the desktop, the second information associated with the first information. The search box is a box for information search For example, if the first information includes a name "Zhangsan" and a phone number, and a functional scene determined based on the first information is a dialing functional scene, text information of "call Zhangsan" and a picture of "phone" may be displayed in the search box at the specified interface, as illustrated in FIG. 2.

Of course, in other embodiments, step S12 includes, but is not limited to, one of displaying the second information in an input box at the specified interface, or displaying the second information in an input field at the specified interface. In other embodiments, step S12 includes displaying the second information in a first area of the specified interface. Here, the first area may be any area of the specified interface.

First information in a clipboard is acquired after switching to a specified interface, and second information may be displayed in the specified interface. The second information is entry information for opening a functional scene to be entered associated with the first information. As such, the entry information of the functional scene to be entered associated with the first information may be determined based on the first information, so as to facilitate a user in performing further operations based on the entry information. User experience is improved, and intelligence of an electronic device can be improved.

It is to be understood that, in embodiments of the disclosure, when the display interface of the electronic device has not been switched to the specified interface, there is no need to acquire the first information in the cache space. As such, there may be beneficial effects of greatly reducing disturbs incurred to a user, or the like.

In some embodiments, the method further can include, in response to detecting a trigger operation on the second information, jumping, according to the identification information, to the target interface of the functional scene to be entered associated with the first information. The identification information includes an URI of the target interface.

Further, the trigger operation may be operations such as clicking, sliding, and the like. For example, the electronic device may be triggered to switch to the target interface by a single click on the second information with a stylus or a finger. For another example, the electronic device may be triggered to switch to the target interface through a double-click on the second information with a mouse. For another example, the electronic device is triggered to switch to the target interface by sliding on the second information with a finger.

In embodiments of the disclosure, the electronic device may be triggered to switch the display interface to the target interface through operations such as clicking and sliding on the specified interface. For example, if the specified interface is desktop, the first information includes a name, a phone number and an address, and the second information is identification information of a target interface corresponding to a parcel sending functional scene, a user may click the second information to enable the second device to directly switch to a parcel sending interface.

As such, in embodiments of the disclosure, an electronic device may be switched from a specified interface directly to a target interface through a trigger operation such as clicking or sliding. In this way, it can switch to the target interface more quickly. For example, if the specified interface is not desktop, there is no need for the electronic device to return to the desktop from the specified interface, to search for and open a corresponding target interface from APPs at the desktop. If the specified interface is desktop, there is also no need for the electronic device to search for and open the corresponding target interface from the APPs. It is convenient for a user to perform further operations based on the first information, and the intelligence of the electronic device is improved.

It is to be understood that, in embodiments of the disclosure, if no trigger operation is detected within a predetermined period of time, the electronic device does not need to switch to a specified interface, and the current interface cancels the display of the second information.

In some embodiments, step S12 can include, after switching to the specified interface, displaying the second information for a predetermined period of time. The predetermined period of time may be smaller than or equal to a first numeric value. Here, the first numeric value may be several seconds, a dozen seconds, and the like.

In embodiments of the disclosure, after the display interface of the electronic device is switched to the specified interface, the second information is displayed only within a predetermined period of time, and the second information is not displayed after the predetermined period of time. As such, energy, such as electric energy, can be saved for the electronic device.

In some embodiments, the method further can include, in response to determining that a number of times that the second information is displayed in the specified interface is greater than a first threshold, cancelling the display of the second information, or in response to determining that a number of trigger operations on the second information is greater than or equal to a second threshold, cancelling the display of the second information. The first threshold may be a natural number greater than or equal to 1. Further, the second threshold may be a natural number greater than or equal to 2.

In embodiments of the disclosure, each time the display interface of the electronic device is switched to the specified interface, and the second information is displayed, a count is made. Alternatively, each time a trigger operation on the second information occurs, a count is made.

As such, in embodiments of the disclosure, if it is determined that a number of times that the second information is displayed in the specified interface is greater than a first threshold, it may indicate that a user has no intention to perform a further operation based on the second information. The display of the second information is cancelled. Alternatively, in embodiments of the disclosure, if it is determined that a number of trigger operations on the second information is greater than or equal to a second threshold, it may indicate that a user has performed the further operation based on the second information for multiple times. Thus, in order to reduce the number of further operations performed by the user based on the second information, the display of the second information may be cancelled.

In some embodiments, the method can further include displaying, in the target interface, the first information. For example, when the electronic device is switched to the specified interface, and the information acquired from the cache space includes a name and a phone number, a functional scene determined based on the name and the phone number is an address book scene, and identification information of an address book is displayed on the specified interface. If electronic device detects a trigger operation of clicking the identification information of the address book by a user, the electronic device is switched to an address book interface based on the trigger operation. At this time, the name and the phone number may also be displayed on the address book interface. As such, there is no need for the user to input the name and the phone number again at the address book interface, making user operations easier and facilitating the user in saving the name and the corresponding phone number in the address book.

In embodiments of the disclosure, the first information may still be displayed when the electronic device is switched to the target interface. As such, there is no need for the user to input the first information at the target interface, facilitating the user in performing further operations on the first information at the target interface, simplifying the user operation, and thereby improving user experiences.

It is to be understood that information related to the first information may also be displayed in the target interface. For example, if the first information is a paragraph of text, a functional scene determined based on the paragraph of text is a novel reading scene, and a novel title corresponding to the text can be matched based on the paragraph of text, the novel title corresponding to the paragraph of text may be displayed at the target interface.

In some embodiments, step S 12 can include sending the first information to a server, and receiving, from the server, the identification information of the target interface of the functional scene to be entered associated with the first information. The identification information is determined by the server based on the first information.

Alternatively, step S12 can include recognizing information content of the first information, determining, according to the information content, a type of the first information, determining, according to the type of the first information, the functional scene to be entered, and determining, according to the first information and the functional scene to be entered, the identification information of the target interface of the functional scene to be entered associated with the first information.

In practical application, one way to recognize the information content of the first information and determine a type of the first information based on the information content is that: the electronic device performs semantic analysis on the information content of the first information so as to obtain information of a predetermined type. For example, semantic analysis may be performed on the first information to obtain a string containing multiple numbers. If the string contains 8 or 11 numbers, it is determined that the string is a phone number.

It is to be understood that, in embodiments of the disclosure, the type of the first information may be determined based on the information content of the first information, and a functional scene to be entered may be determined based on the type of the first information, so as to determine identification information of the corresponding target interface based on the functional scene.

For example, if the first information includes "Liusan" and "13012345678", the electronic device or the server determines that the type of the first information is a number and a name based on "Liusan" and "13012345678", determines a corresponding functional scene to be an address book scene based on the number and the name in the first information, obtains a corresponding URI based on the address book scene by splicing. Thus, after acquiring the URI, the electronic device generates an "intent" call based on the URI. The specific pseudocode for the call may be:

```
      Intent intent = new Intent(Intent.ACTION_INSERT);
      intent.setType("vnd.android.cursor.dir/person");
      intent.setType("vnd.android.cursor.item/contact");
      intent.setType("vnd.android.cursor.item/raw_contact");
      intent.putExtra(android.provider.ContactsContract.Intents.Insert.NAME, "Liusan");
      intent.putExtra(android.provider.ContactsContract.Intents.Insert.PHON,"1301234567
      8");
      startActivity(intent).
```

In embodiments of the disclosure, an electronic device itself may recognize a functional scene corresponding to the first information, and determine identification information of a target interface based on the functional scene. As such, it is convenient for the user to perform further operations based on the second information. Moreover, by recognizing the functional scene corresponding to the first information and acquiring the identification information corresponding to the functional scene by the electronic device itself, there is no need to acquire the second information from another electronic device or terminal, data interaction may be reduced, and the identification information may be acquired in a timely manner.

Alternatively, the electronic device may send the first information to the server, so that the server recognizes the functional scene corresponding to the first information based on the first information, obtains identification information of the target interface based on the functional scene, and sends the identification information to the electronic device. In this way, in one aspect, the electronic device does not need to recognize the functional scene corresponding to the first information, alleviating the burden for the electronic device; in another aspect, since the server includes more functional scenes corresponding to the first information, the probability of successfully recognizing the corresponding functional scene through the first information may be improved. For example, with respect to a paragraph of text, no functional scene corresponding to the text can be found when recognizing the text with the electronic device, but a functional scene corresponding to the text may be found by the server.

It is to be understood that, step S12 may further include: sending the first information to a second electronic device, and receiving, from the second electronic device, the identification information of the target interface of the functional scene to be entered associated with the first information. The identification information is determined by the second electronic device based on the first information.

Here, the second electronic device may also be a mobile phone, a computer, a tablet, etc. In the embodiment, the method is applied to the first electronic device. In this way, in the embodiment, the second information may also be acquired from any other electronic device, as long as the second electronic device can determine, based on the first information, the corresponding functional scene.

In some embodiments, the step S12 includes: acquiring identification information of target interfaces of a plurality of functional scenes to be entered associated with the first information; and the operation of displaying, in the specified interface, the second information associated with the first information includes: displaying, in the specified interface, second information of one or more than one of the plurality of functional scenes.

In an embodiment, the first information corresponds to a functional scene. For example, the first information includes a name, a phone number and an address, and the functional scene is a parcel sending functional scene.

In another embodiment, the first information corresponds to multiple functional scenes. For example, if the first information includes a name and a phone number, the functional scenes may be an address book scene, a dialing scene, a Wechat scene, or the like.

Here, one functional scene corresponds to one piece of second information, and the one piece of second information includes information indicating one target interface or information indicating switching to one target interface.

In embodiments of the disclosure, if one functional scene is determined based on the first information, second information corresponding to the functional scene may be displayed in the specified interface. If a plurality of functional scenes are determined based on the first information, second information corresponding to at least one of the plurality of functional scenes may be displayed in the specified interface.

In some embodiments, the operation of displaying, in the specified interface, the second information of one of the plurality of functional scenes associated with the first information includes one of: displaying the second information of one functional scene that has been used most frequently among the plurality of functional scenes; or displaying the second information of one functional scene that is most recently used among the plurality of functional scenes.

In embodiments of the disclosure, the second information corresponding to one functional scene may be selected from the second information corresponding to the plurality of functional scenes, so as to display the selected second information. For example, the second information of one functional scene that is most frequently used among the plurality of functional scenes is selected and displayed. For another example, the second information of one functional scene that is most recently used among the plurality of functional scenes is selected and displayed. In this way, the second information of the functional scene which corresponds to the first information and is most frequently or most recently used by the user may be selected. The accuracy in determining the corresponding functional scene based on the first information is increased, so that subsequent further operations based on the second information of the functional scene can better satisfy a user requirement, and user experience is improved.

Of course, in other embodiments of the disclosure, the second information corresponding to one functional scene may be selected from the second information corresponding to the plurality of functional scenes based on user habits, so as to display the selected second information. For example, in some embodiments, the operation of displaying, in the specified interface, the second information of one of the plurality of functional scenes associated with the first information includes: displaying the second information of one functional scene matched with use habits.

For example, if first information containing a paragraph of text is acquired, a webpage scene, a Wechat scene or a novel reading scene may be determined according to the paragraph of text. If it is determined that the user has a habit of watching CCTV news at 7 pm everyday, second information of a webpage scene matched with the user's habit may be displayed at 6:55 pm.

For another example, if first information containing a shopping password is acquired, a Taobao shopping scene, a Tmall shopping scene, a Vipshop shopping scene, etc. may be determined according to the website address. If the user likes shopping with Tmall APP, second information of the Tmall shopping scene matched with the user's habit may be displayed.

In some other embodiments, displaying, in the specified interface, the second information of more than one of the plurality of functional scenes associated with the first information can include displaying the second information of the more than one of the plurality of functional scenes in a polling manner.

Here, displaying the second information of the more than one of the plurality of functional scenes in a polling manner may be: displaying the second information of each of the more than one functional scene within a preset time interval, and stopping the display or polling again after the second information of all of the more than one functional scene has been displayed in a polling manner. Here, the preset time interval may be less than 10 seconds.

For example, if it is determined that the more than one functional scene include a functional scene 1, a functional scene 2 and a functional scene 3, the second information corresponding to the functional scene 1 is information A, the second information corresponding to the functional scene 2 is information B, and the second information corresponding to the functional scene 3 is information C, the information A, the information B and the information C may be displayed in the specified interface successively. Each of the information A, the information B and the information C may be displayed for 5 seconds.

Of course, in other embodiments, when displaying, in the specified interface, the second information of more than one of the plurality of functional scenes, the second information of only some of the more than one functional scene may be displayed in a polling manner as well.

It is to be understood that, in embodiments of the disclosure, the second information of which of the more than one functional scene is displayed in a polling manner may be determined according to the number of times that the more than one functional scene has been used previously or the time when the more than one functional scene was used last time.

In an implementation, the second information of some functional scenes that have been used for more than a certain threshold number of times among the more than one functional scenes is selected and displayed. For example, if the more than one functional scene are respectively: a functional scene 1, a functional scene 2, a functional scene 3 and a functional scene 4, each of the functional scene 1 and the functional scene 3 has been used for more than 10 times previously, and each of the functional scene 2 and the functional scene 4 has been used for less than twice previously, it is determined to display the second information of the functional scene 1 and the functional scene 3 in a polling manner.

In another implementation, the second information of some functional scenes, for which the last usage time period and the current usage time period are within a threshold range, is selected and displayed. For example, if the more than one functional scene are respectively: a functional scene 1, a functional scene 2, a functional scene 3 and a functional scene 4, the last time that the functional scene 1 and the functional scene 2 are used are yesterday and the day before yesterday respectively, and the last time that the functional scene 2 and the functional scene 3 are used are a month ago and three months ago, it is determined to display the second information of the functional scene 1 and the functional scene 3 in a polling manner.

In embodiments of the disclosure, by displaying, in the specified interface, the second information of some or all of the more than one functional scene, a user can determine, based on his/her judgment, the second information of an appropriate functional scene, and perform a further operation based on the second information of the functional scene. In this way, a user requirement may be met better, and user satisfaction may be improved. Furthermore, the probability that the user misses out operating the second information of the appropriate functional scene is reduced due to display in a polling manner.

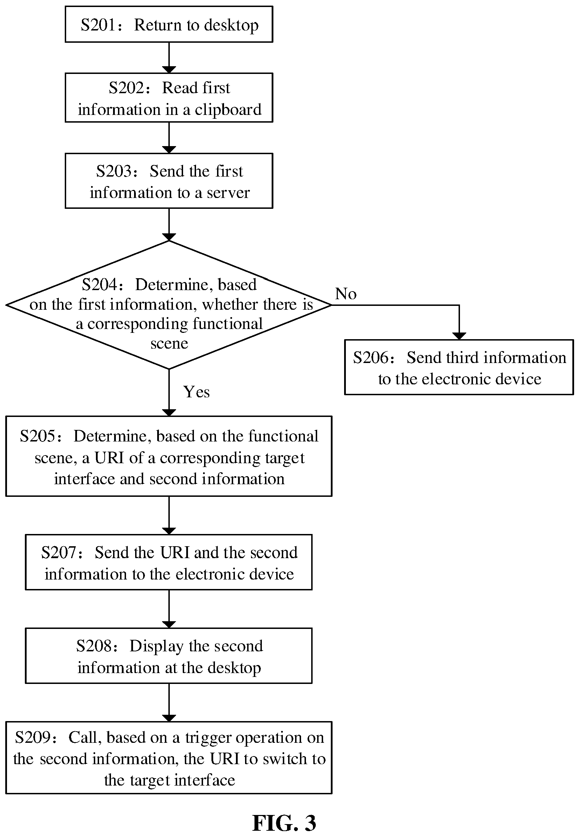

For better understanding the above embodiments of the disclosure, description is made by way of example below. FIG. 3 illustrates a method for processing information according to an exemplary embodiment. As illustrated in FIG. 3, the method includes the following steps.

The method for processing information according to embodiments of the disclosure is applied to a system for processing information. The system for processing information includes an electronic device and a server.

In step S201, a desktop is returned to. Optionally, the electronic device determines to return a display interface of the electronic device to the desktop.

In step S202, first information in a clipboard is read. Optionally, the electronic device detects content in the clipboard, and in response to determining that there is first information in the clipboard, reads the first information in the clipboard.

In step S203 the first information is sent to the server. Optionally, the electronic device sends the first information to the server.

In step S204, it is determined, based the first information, whether there is a corresponding functional scene. Step S205 is performed if there is a corresponding functional scene. Step S206 is performed if there is no corresponding functional scene. Optionally, the server analyzes the first information to determine whether there is a functional scene corresponding to the first information. Step S205 is performed if there is a functional scene corresponding to the first information. Step S206 is performed if there is no functional scene corresponding to the first information.

In other embodiments, the operation in step S204 may also be performed by the electronic device. If step S204 is performed by the electronic device, step S205 described in the below is also performed by the electronic device, and steps S206 and S207 are not performed.

In step S205, based on the functional scene, a URI of a corresponding target interface and second information are determined. Optionally, the server determines, based on the first information, the corresponding functional scene, and determines, based on the functional scene, the URI of the corresponding target interface and entry information of the functional scene.

Here, the second information is entry information for opening a functional scene to be entered. In particular, the second information is text information and/or icon information indicating the target interface. For example, if the target interface is the homepage of Alipay, the second information may be the icon of Alipay or "Alipay" in text.

Of course, in other embodiments, the second information may also include prompt information of jumping to the target interface.

In an alternative embodiment, step S205 may be: if it is determined that the first information includes a name and a phone number, a functional scene corresponding to the first information is an address book scene, and it is determined to obtain a corresponding URI for the address book by splicing.

In another embodiment, step S205 may be: if it is determined that the first information includes a name, a phone number and an address, it is determined that a functional scene corresponding to the first information is a parcel sending scene, and it is determined to obtain a corresponding URI for the parcel sending scene by splicing.

In step S206, third information is sent to the electronic device. Optionally, the server sends the third information to the electronic device. The third information is used for prompting the electronic device to end the operations.

In practical application, the server sends an empty instruction to the electronic device, and the electronic device does not perform any operation after receiving the empty instruction. It is to be noted that not performing any operation and ending operation by the electronic device means that at the electronic device end, what the user can only see is that the display interface returns to the desktop.

In step S207, the URI and the second information is sent to the electronic device. Optionally, the server sends the URI and the second information to the electronic device.

In step S208, the second information is displayed at the desktop. Optionally, the electronic device displays the second information at the desktop. In an embodiment, the electronic device displays the entry information at the desktop.

In step S209, the URI is called based on a trigger operation on the second information, to switch to a target interface. Optionally, based on the trigger operation of clicking the second information, the electronic device calls the URI contained in the second information to switch to the target interface. Here, the URI uniquely identifies the target interface. Here, the target interface may be a target interface of a webpage, an APP, an official account or the like. In an embodiment, after step S209, the method further includes: displaying, in the target interface, the first information.

In embodiments of the disclosure, after returning to the desktop, the electronic device reads first information in a clipboard and acquires a URI and second information of a functional scene corresponding to the first information, and displays the second information on the desktop. The electronic device directly jumps to a target interface from the desktop by a trigger operation of clicking the second information. There is no need for a user to find, from the desktop, the target interface to be switched to corresponding to the first information, the target interface can be switched to quickly, facilitating the user in further operations and improving user experience and intelligence of the electronic device.

Additionally, in embodiments of the disclosure, if the first information is displayed in the target interface, for example displaying the name and the phone number in an interface of the address book, further operations based on the first information can be simplified, for example, a further operation of saving a phone number of a contact person can be simplified.

Moreover, in embodiments of the disclosure, the electronic device sends the first information to the server, so that the server recognizes the corresponding functional scene based on the first information, and obtains the corresponding URI based on the functional scene by splicing, etc. Therefore, the burden for the electronic device can be alleviated, and the first information may be analyzed more comprehensively, so as to increase the probability of determining the corresponding functional scene based on the first information.

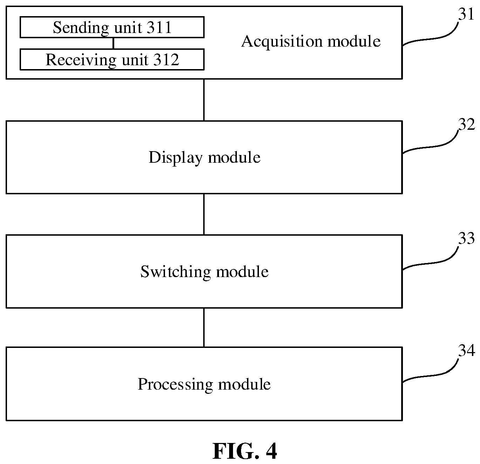

FIG. 4 illustrates a block diagram of a device for processing information according to an exemplary embodiment. As illustrated in FIG. 4, the device includes an acquisition module 31 and a display module 32. The acquisition module 31 is configured to acquire first information in a clipboard.

The display module 32 is configured to display, in a specified interface, second information associated with the first information. The second information is entry information for opening a functional scene to be entered associated with the first information.

In some embodiments, the acquisition module 31 is further configured to acquire identification information of a target interface of a functional scene to be entered associated with the first information.

In some embodiments, the device can further include a switching module 33. The switching module 33 is configured to, in response to detecting a trigger operation on the second information, jump, according to the identification information, to the target interface of the functional scene to be entered associated with the first information.

In some embodiments, the display module 32 is further configured to: after switching to the specified interface, display the second information for a predetermined period of time.

In some embodiments, the device further includes a processing module 34. The processing module 34 is configured to in response to determining that a number of times that the second information is displayed in the specified interface is greater than a first threshold, cancel the display of the second information, or in response to determining that a number of trigger operations on the second information is greater than or equal to a second threshold, cancel the display of the second information.

Again, as illustrated in FIG. 4, in some embodiments, the acquisition module 31 includes a sending unit 311 and a receiving unit 312. The sending module 311 can be configured to send the first information to a server.

The receiving module 312 can be configured to receive, from the server, the identification information of the target interface of the functional scene to be entered associated with the first information. The identification information is determined by the server based on the first information.

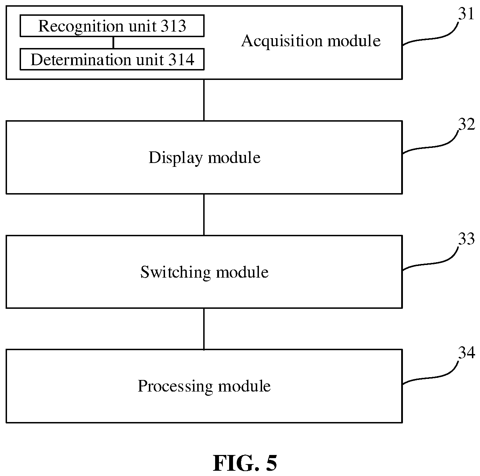

As illustrated in FIG. 5, in some embodiments, the acquisition module 31 includes a recognition unit 313 and a determination unit 314. The recognition module 313 can be configured to recognize information content of the first information.

The determination unit 314 can be configured to determine, according to the information content, a type of the first information, determine, according to the type of the first information, the functional scene to be entered, and determine, according to the first information and the functional scene to be entered, the identification information of the target interface of the functional scene to be entered associated with the first information.

In an embodiment, the acquisition module 31 is further configured to acquire identification information of target interfaces of a plurality of functional scenes to be entered associated with the first information. The display module 32 is configured to display, in the specified interface, second information of one or more than one of the plurality of functional scenes associated with the first information.

In another embodiment, the display module 32 is configured to: display the second information of one functional scene that has been used most frequently among the plurality of functional scene; or display the second information of one functional scene that is most recently used among the plurality of functional scenes.

Further, the display module 32 can be configured to display the second information of the more than one of the plurality of functional scenes in a polling manner. The display module 32 can further be configured to display, in the target interface, the first information.

In some embodiments, the specified interface includes a desktop. The display module 32 is configured to display, in a search box at the desktop, the second information associated with the first information.

The particular way in which modules of the devices in the embodiments above execute operations have been described in detail in the method embodiments, which will not be described.

In embodiments of the disclosure, also provided is an electronic device, including a processor, and a memory for storing processor-executable instructions. The processor is configured to execute the executable instructions to implement the method for processing information according to any embodiment of the disclosure.

The memory may include various storage mediums. The storage medium is a non-transitory computer storage medium, and can still keep information stored thereon when a communication device is powered down.

The processor may be connected with the memory through such as a bus, so as to read an executable program stored on the memory, for example to implement at least one of the method illustrated in FIG. 1 or FIG. 3.

In embodiments of the disclosure, also provided is a computer-readable storage medium with an executable program stored thereon. The executable program, when executed by a processor, implements the method for processing information according to any embodiment of the disclosure, for example, at least one of the method illustrated in FIG. 1 or FIG. 3.

The particular way in which modules of the devices in the embodiments above execute operations have been described in detail in the method embodiments, which will not be described.

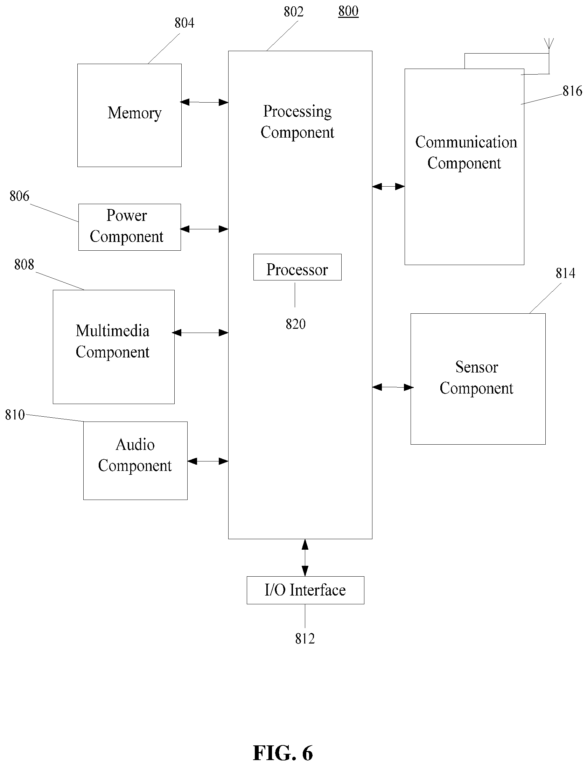

FIG. 6 illustrates a block diagram of an electronic device 800 according to an exemplary embodiment. For example, the electronic device 800 may be a mobile phone, a computer, a digital broadcast terminal, a message transceiving device, a game console, a tablet device, medical equipment, fitness equipment, a personal digital assistant, and the like.

As illustrated in Fig. 6, the electronic device 800 may include one or more of the following: a processing component 802, a memory 804, a power component 806, a multi-media component 808, an audio component 810, an input/output (I/O) interface 812, a sensor component 814, and a communication component 816.

The processing component 802 generally controls the overall operation of the electronic device 800, such as operations associated with display, a phone call, data communication, a camera operation and a recording operation. The processing component 802 may include one or more processors 820 to execute instructions, so as to complete all or some steps in the methods above. In addition, the processing component 802 may include one or more modules for the interaction between the processing component 802 and the other components. For example, the processing component 802 may include a multi-media module for interaction between the multi-media component 808 and the processing component 802.

The memory 804 is configured to store various types of data so as to support operations at the device 800. The examples of these types of data include instructions of any application or method for operating on the electronic device 800, contact person data, phone book data, messages, pictures, video, etc. The memory 804 may be implemented by any type of volatile or non-volatile storage device or a combination of both, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 supplies power for the various components of the electronic device 800. The power component 806 may include a power management system, one or more power sources, and other components associated with the generation, management and distribution of power for the electronic device 800.

The multi-media component 808 includes a screen serving as an output interface between the electronic device 800 and a user. In some embodiments, the screen may include a liquid crystal display (LCD) and a touch pad (TP). If the screen includes a touch pad, then the screen may be implemented as a touch screen so as to receive an input signal from the user. The touch pad includes one or more touch sensors to sense touch, slide and gestures on the touch pad. The touch sensor may not only sense the boundaries of touch or slide actions, but also can detect the duration and pressure related to the touch or slide operations. In some embodiments, the multi-media component 808 includes a front camera and/or a rear camera. When the device 800 is in an operating mode, such as a photography mode or a video mode, the front camera and/or the rear camera may receive external multi-media data. Each front camera and rear camera may be a fixed optical lens system or have a focal length or optical zoom capability.

The audio component 810 is configured to output and/or input an audio signal. For example, the audio component 810 includes a microphone (MIC), and when the electronic device 800 is in an operating mode, such as a calling mode, a recording mode and a voice recognition mode, the microphone is configured to receive an external audio signal. The received audio signal can be further stored in the memory 804 or sent via the communication component 816. In some embodiments, the audio component 810 further includes a loudspeaker for output an audio signal.

The I/O interface 812 provides an interface between the processing component 802 and a peripheral interface module, and the above peripheral interface module may be a keyboard, a click wheel, a button, etc. The button may include but is not limited to a home page button, a volume button, a start button and a locking button.

The sensor component 814 includes one or more sensors for providing state evaluation for the electronic device 800 from various aspects. For example, the sensor component 814 may detect an on/off state of the device 800, and the relative positioning between components; for example the components are a display and keyboard of the electronic device 800. The sensor component 814 may also detect a positional change of the electronic device 800 or a component of the electronic device, whether there is contact between a user and the electronic device 800, the orientation or acceleration/deceleration of the electronic device 800, and a temperature change of the electronic device 800. The sensor component 814 may include a proximity sensor configured to detect the existence of an object nearby without any physical contact. The sensor component 814 may also include an optical sensor, such as a CMOS or CCD image sensor, for use in an imaging application. In some embodiments, the sensor component 814 may also include an acceleration sensor, a gyroscope sensor, a magnetic sensor, a pressure sensor or a temperature sensor.

The communication component 816 is configured for wired or wireless communication between the electronic device 800 and another device. The electronic device 800 may access a communication standard based wireless network, such as WiFi, 2G, 5G or a combination thereof. In an exemplary embodiment, the communication component 816 receives a broadcast signal from an external broadcast management system or broadcasts relevant information through a broadcast channel. In an exemplary embodiment, the communication component 816 further includes a near-field communication (NFC) module for short-range communication. For example, the NFC module may be implemented based on the radio-frequency identification (RFID) technique, the infrared data association (IrDA) technique, the ultra-wide band (UWB) technique, the bluetooth (BT) technique or others.

In an exemplary embodiment, the electronic device 800 may be implemented by one or more application-specific integrated circuit (ASIC), a digital signal processor (DSP), a digital signal processing device (DSPD), a programmable logic device (PLD), a field programmable gate array (FPGA), a controller, a micro-controller, a micro-processor or other electronic elements, for executing the above methods.

In an exemplary embodiment, a non-transitory computer-readable storage medium including instructions is also provided, for example a memory 804 including instructions. The above instructions may be executed by the processor 820 of the electronic device 800 to complete the above methods. For example, the non-transitory computer-readable storage medium may be a ROM, a random access memory (RAM), a CD-ROM, a magnetic tape, a floppy disk, an optical data storage device and so on.

## Claims

1. A method for processing information, comprising:
acquiring (S11) first information in a clipboard in response to switch of a display interface of a first application of an electronic device to a desktop of the electronic device, at which at least one icon of at least one application is displayed, the first information being stored in the clipboard prior to the switch to the desktop;
determining respective types of at least two information elements in the first information based on information content of the first information;
determining a plurality of functional scenes to be entered based on the respective types of the at least two information elements in the first information;
acquiring a uniform resource identifier, URI, of target interfaces of the plurality of functional scenes to be entered associated with the first information by splicing the respective types of the at least two information elements in the first information; and
displaying, in a search box at the desktop, second information of one or more than one of the plurality of functional scenes associated with the first information,
wherein the second information is based on the URI and includes entry information of the one or more target interfaces of the plurality of functional scenes to be entered associated with the first information.

2. The method according to claim 1, further comprising:
jumping, according to the URI, to the target interfaces of the plurality of the functional scenes to be entered associated with the first information, in response to detecting a trigger operation on the second information.

3. The method according to claim 1 or 2, wherein before displaying, in the search box at the desktop, the second information of one or more than one of the plurality of functional scenes associated with the first information, the method further comprises:
displaying the second information for a predetermined period of time after switching to the desktop.

4. The method according to claim 1 or 2, further comprising one of:
cancelling the display of the second information, in response to determining that a number of times that the second information is displayed in the search box at the desktop is greater than a first threshold; or
cancelling the display of the second information, in response to determining that a number of trigger operations on the second information is greater than or equal to a second threshold.

5. The method according to claim 1 or 2, wherein the acquiring the URI of the target interfaces of the plurality of the functional scenes to be entered associated with the first information further comprises:
sending the first information to a server, and receiving, from the server, the URI of the target interfaces of the plurality of the functional scenes to be entered associated with the first information, wherein the URI is determined by the server based on the first information; or
recognizing information content of the first information, determining, according to the information content, a type of the first information, determining, according to the type of the first information, the plurality of the functional scenes to be entered, and determining, according to the first information and the plurality of the functional scenes to be entered, the URI of the target interfaces of the plurality of the functional scenes to be entered associated with the first information.

6. The method according to claim 1, wherein displaying, in the search box at the desktop, the second information of one or more than one of the plurality of functional scenes associated with the first information further comprises one of:
displaying the second information of one functional scene that has been used most frequently among the plurality of functional scenes; or
displaying the second information of one functional scene that is most recently used among the plurality of functional scenes.

7. The method according to claim 1, wherein displaying, in the search box at the desktop, the second information of one or more than one of the plurality of functional scenes associated with the first information further comprises:
displaying the second information of the more than one of the plurality of functional scenes in a polling manner.

8. The method according to claim 1, further comprising:
displaying, in the target interfaces, the first information.

9. A device for processing information, comprising:
an acquisition module (31), configured to acquire first information in a clipboard in response to switch of a display interface of a first application of an electronic device to a desktop of the electronic device, at which at least one icon of at least one application is displayed, the first information being stored in the clipboard prior to the switch to the desktop; determine respective types of at least two information elements in the first information based on information content of the first information; determine a plurality of functional scenes to be entered based on the respective types of the at least two information elements in the first information; and acquire a uniform resource identifier, URI, of target interfaces of the plurality of functional scenes to be entered associated with the first information by splicing the respective types of the at least two information elements in the first information;
a display module (32), configured to display, in a search box at the desktop, second information of one or more than one of the plurality of functional scenes associated with the first information,
wherein the second information is based on the URI and includes entry information of the one or more target interfaces of the plurality of functional scenes to be entered associated with the first information.

10. A computer program product comprising processor-executable instructions which, when the program is executed by an electronic device, comprising:
a processor, and
a memory for storing the processor-executable instructions,
wherein the processor is configured to run the executable instructions, cause the electronic device to implement the method for processing information according to any one of claims 1 to 8.

11. A computer-readable storage medium with an executable program stored thereon, wherein the executable program, when executed by a processor, implements a method for processing information according to any one of claims 1 to 8.

## Patentansprüche

1. Ein Verfahren zum Verarbeiten von Informationen, umfassend:
Erfassen (S11) von ersten Informationen in einer Zwischenablage als Reaktion auf das Umschalten einer Anzeigeschnittstelle einer ersten Anwendung einer elektronischen Vorrichtung auf einen Desktop der elektronischen Vorrichtung, auf dem mindestens ein Symbol mindestens einer Anwendung angezeigt wird, wobei die ersten Informationen vor dem Umschalten auf den Desktop in der Zwischenablage gespeichert werden;
Bestimmen jeweiliger Typen von mindestens zwei Informationselementen in den ersten Informationen basierend auf Informationsinhalt der ersten Informationen;
Bestimmen einer Vielzahl von Funktionsszenen, die basierend auf den jeweiligen Typen der mindestens zwei Informationselemente in den ersten Informationen einzutragen sind;
Erfassen eines Uniform Resource Identifiers, URI, von Zielschnittstellen der Vielzahl von Funktionsszenen, die in Zusammenhang mit den ersten Informationen einzutragen sind, durch Zusammenführen der jeweiligen Typen der mindestens zwei Informationselemente in den ersten Informationen; und
Anzeigen in einem Suchfeld auf dem Desktop von zweiten Informationen einer oder mehr als einer der Vielzahl von Funktionsszenen in Zusammenhang mit den ersten Informationen,
wobei die zweiten Informationen auf dem URI basieren und Eintragsinformationen der einen oder der mehreren Zielschnittstellen der Vielzahl von Funktionsszenen, die in Zusammenhang mit den ersten Informationen einzutragen sind, beinhalten.

2. Das Verfahren nach Anspruch 1, weiter umfassend:
Springen, gemäß dem URI, zu den Zielschnittstellen der Vielzahl der Funktionsszenen, die in Zusammenhang mit den ersten Informationen einzutragen sind, als Reaktion auf das Erkennen eines Auslösevorgangs an den zweiten Informationen.

3. Das Verfahren nach Anspruch 1 oder 2, wobei das Verfahren vor dem Anzeigen im Suchfeld auf dem Desktop der zweiten Informationen einer oder mehr als einer der Vielzahl von Funktionsszenen in Zusammenhang mit den ersten Informationen weiter umfasst:
Anzeigen der zweiten Informationen für einen vorbestimmten Zeitraum nach dem Umschalten auf den Desktop.

4. Das Verfahren nach Anspruch 1 oder 2, weiter eines umfassend von:
Annullieren der Anzeige der zweiten Informationen als Reaktion auf das Bestimmen, dass eine Anzahl von Malen, mit der die zweiten Informationen im Suchfeld auf dem Desktop angezeigt werden, größer ist als eine erste Schwelle; oder
Annullieren der Anzeige der zweiten Informationen als Reaktion auf das Bestimmen, dass eine Anzahl von Auslösevorgängen an den zweiten Informationen größer oder gleich einer zweiten Schwelle ist.

5. Das Verfahren nach Anspruch 1 oder 2, wobei das Erfassen des URI der Zielschnittstellen der Vielzahl der Funktionsszenen, die in Zusammenhang mit den ersten Informationen einzutragen sind, weiter umfasst:
Senden der ersten Informationen an einen Server und Empfangen von dem Server des URI der Zielschnittstellen der Vielzahl der Funktionsszenen, die in Zusammenhang mit den ersten Informationen einzutragen sind, wobei der URI vom Server basierend auf den ersten Informationen bestimmt wird; oder
Erkennen von Informationsinhalt der ersten Informationen, Bestimmen gemäß dem Informationsinhalt eines Typs der ersten Informationen, Bestimmen gemäß dem Typ der ersten Informationen der Vielzahl der Funktionsszenen, die einzutragen sind, und Bestimmen gemäß den ersten Informationen und der Vielzahl der Funktionsszenen, die einzutragen sind, des URI der Zielschnittstellen der Vielzahl der Funktionsszenen, die in Zusammenhang mit den ersten Informationen einzutragen sind.

6. Das Verfahren nach Anspruch 1, wobei das Anzeigen im Suchfeld auf dem Desktop der zweiten Informationen einer oder mehr als einer der Vielzahl von Funktionsszenen in Zusammenhang mit den ersten Informationen weiter eines umfasst von:
Anzeigen der zweiten Informationen einer Funktionsszene, die unter der Vielzahl von Funktionsszenen am häufigsten verwendet wurde; oder
Anzeigen der zweiten Informationen einer Funktionsszene, die unter der Vielzahl von Funktionsszenen zuletzt verwendet wurde.

7. Das Verfahren nach Anspruch 1, wobei das Anzeigen im Suchfeld auf dem Desktop der zweiten Informationen einer oder mehr als einer der Vielzahl von Funktionsszenen in Zusammenhang mit den ersten Informationen weiter umfasst:
Anzeigen der zweiten Informationen der mehr als einen der Vielzahl von Funktionsszenen in Art einer Abfrage.

8. Das Verfahren nach Anspruch 1, weiter umfassend:
Anzeigen der ersten Informationen in den Zielschnittstellen.

9. Eine Vorrichtung zum Verarbeiten von Informationen, umfassend:
ein Erfassungsmodul (31), das konfiguriert ist, um als Reaktion auf das Umschalten einer Anzeigeschnittstelle einer ersten Anwendung einer elektronischen Vorrichtung auf einen Desktop der elektronischen Vorrichtung, auf dem mindestens ein Symbol mindestens einer Anwendung angezeigt wird, erste Informationen in einer Zwischenablage zu erfassen, wobei die ersten Informationen vor dem Umschalten auf den Desktop in der Zwischenablage gespeichert werden; jeweilige Typen von mindestens zwei Informationselementen in den ersten Informationen basierend auf Informationsinhalt der ersten Informationen zu bestimmen; eine Vielzahl von Funktionsszenen, die einzutragen sind, basierend auf den jeweiligen Typen der mindestens zwei Informationselemente in den ersten Informationen zu bestimmen; und einen Uniform Resource Identifier, URI, von Zielschnittstellen der Vielzahl von Funktionsszenen, die in Zusammenhang mit den ersten Informationen einzutragen sind, durch Zusammenführen der jeweiligen Typen der mindestens zwei Informationselemente in den ersten Informationen zu erfassen;
ein Anzeigemodul (32), das konfiguriert ist, um in einem Suchfeld auf dem Desktop von zweiten Informationen einer oder mehr als einer der Vielzahl von Funktionsszenen in Zusammenhang mit den ersten Informationen anzuzeigen,
wobei die zweiten Informationen auf dem URI basieren und Eintragsinformationen der einen oder der mehreren Zielschnittstellen der Vielzahl von Funktionsszenen, die in Zusammenhang mit den ersten Informationen einzutragen sind, beinhalten.

10. Ein Computerprogrammprodukt, das von einem Prozessor ausführbare Anweisungen umfasst, die, wenn das Programm von einer elektronischen Vorrichtung ausgeführt wird, umfasst:
einen Prozessor, und
einen Speicher zum Speichern der von einem Prozessor ausführbaren Anweisungen,
wobei der Prozessor konfiguriert ist, um die ausführbaren Anweisungen laufen zu lassen, die elektronische Vorrichtung veranlassen, das Verfahren zum Verarbeiten von Informationen nach einem der Ansprüche 1 bis 8 zu implementieren.

11. Ein computerlesbares Speichermedium mit einem darauf gespeicherten ausführbaren Programm, wobei das ausführbare Programm, wenn es von einem Prozessor ausgeführt wird, ein Verfahren zum Verarbeiten von Informationen nach einem der Ansprüche 1 bis 8 implementiert.

## Revendications

1. Un procédé de traitement d'informations, comprenant :
l'acquisition (S11) de premières informations dans un presse-papiers en réponse au passage d'une interface d'affichage d'une première application d'un dispositif électronique à un bureau du dispositif électronique, sur lequel au moins une icône d'au moins une application est affichée, les premières informations étant stockées dans le presse-papiers avant le passage au bureau ;
la détermination de types respectifs d'au moins deux éléments d'information dans les premières informations sur la base du contenu d'information des premières informations ;
la détermination d'une pluralité de scènes fonctionnelles auxquelles accéder sur la base des types respectifs des au moins deux éléments d'information dans les premières informations ;
l'acquisition d'un identifiant de ressource uniforme, URI, d'interfaces cibles de la pluralité de scènes fonctionnelles auxquelles accéder associées aux premières informations en épissant les types respectifs des au moins deux éléments d'information dans les premières informations ; et
l'affichage, dans un champ de recherche sur le bureau, de secondes informations d'une ou de plusieurs de la pluralité de scènes fonctionnelles associées aux premières informations,
dans lequel les secondes informations sont basées sur l'URI et incluent des informations d'entrée d'une ou de plusieurs interfaces cibles de la pluralité de scènes fonctionnelles auxquelles accéder associées aux premières informations.

2. Le procédé selon la revendication 1, comprenant en outre :
le saut, selon l'URI, aux interfaces cibles de la pluralité des scènes fonctionnelles auxquelles accéder associées aux premières informations, en réponse à la détection d'une opération de déclenchement sur les secondes informations.

3. Le procédé selon la revendication 1 ou 2, dans lequel avant d'afficher, dans le champ de recherche sur le bureau, les secondes informations d'une ou de plusieurs de la pluralité de scènes fonctionnelles associées aux premières informations, le procédé comprend en outre :
l'affichage des secondes informations pendant une période de temps prédéterminée après le passage au bureau.

4. Le procédé selon la revendication 1 ou 2, comprenant en outre l'une parmi :
l'annulation de l'affichage des secondes informations, en réponse à la détermination qu'un nombre de fois que les secondes informations sont affichées dans le champ de recherche sur le bureau est supérieur à un premier seuil ; ou
l'annulation de l'affichage des secondes informations, en réponse à la détermination qu'un nombre d'opérations de déclenchement sur les secondes informations est supérieur ou égal à un second seuil.

5. Le procédé selon la revendication 1 ou 2, dans lequel l'acquisition de l'URI des interfaces cibles de la pluralité des scènes fonctionnelles auxquelles accéder associées aux premières informations comprend en outre :
l'envoi des premières informations à un serveur, et la réception, en provenance du serveur, de l'URI des interfaces cibles de la pluralité des scènes fonctionnelles auxquelles accéder associées aux premières informations, dans lequel l'URI est déterminé par le serveur sur la base des premières informations ; ou
le reconnaissance du contenu d'information des premières informations, la détermination, en fonction du contenu d'information, d'un type des premières informations, la détermination, en fonction du type des premières informations, de la pluralité des scènes fonctionnelles auxquelles accéder, et la détermination, en fonction des premières informations et de la pluralité des scènes fonctionnelles auxquelles accéder, de l'URI des interfaces cibles de la pluralité des scènes fonctionnelles auxquelles accéder associées aux premières informations.

6. Le procédé selon la revendication 1, dans lequel l'affichage, dans le champ de recherche sur le bureau, des secondes informations d'une ou de plusieurs de la pluralité de scènes fonctionnelles associées aux premières informations comprend en outre l'un parmi :
l'affichage des secondes informations d'une scène fonctionnelle qui a été la plus fréquemment utilisée parmi la pluralité de scènes fonctionnelles ; ou
l'affichage des secondes informations d'une scène fonctionnelle qui est la plus récemment utilisée parmi la pluralité de scènes fonctionnelles.

7. Le procédé selon la revendication 1, dans lequel l'affichage, dans le champ de recherche sur le bureau, des secondes informations d'une ou de plusieurs de la pluralité de scènes fonctionnelles associées aux premières informations comprend en outre :
l'affichage des secondes informations de plus d'une scène fonctionnelle parmi la pluralité de scènes fonctionnelles par interrogration.

8. Le procédé selon la revendication 1, comprenant en outre :
l'affichage, dans les interfaces cibles, des premières informations.

9. Un dispositif de traitement d'informations, comprenant :
un module d'acquisition (31), configuré pour acquérir des premières informations dans un presse-papiers en réponse au passage d'une interface d'affichage d'une première application d'un dispositif électronique à un bureau du dispositif électronique, sur lequel au moins une icône d'au moins une application est affichée, les premières informations étant stockées dans le presse-papiers avant le passage au bureau ; déterminer des types respectifs d'au moins deux éléments d'information dans les premières informations sur la base du contenu d'information des premières informations ; déterminer une pluralité de scènes fonctionnelles auxquelles accéder sur la base des types respectifs des au moins deux éléments d'information dans les premières informations ; et acquérir un identifiant de ressource uniforme, URI, d'interfaces cibles de la pluralité de scènes fonctionnelles auxquelles accéder associées aux premières informations en épissant les types respectifs d'au moins deux éléments d'information dans les premières informations ;
un module d'affichage (32), configuré pour afficher, dans un champ de recherche sur le bureau, des secondes informations d'une ou de plusieurs scènes fonctionnelles parmi la pluralité de scènes fonctionnelles associées aux premières informations,
dans lequel les secondes informations sont basées sur l'URI et incluent des informations d'entrée d'une ou de plusieurs interfaces cibles de la pluralité de scènes fonctionnelles auxquelles accéder associées aux premières informations.

10. Un produit de programme informatique comprenant des instructions exécutables par processeur qui, lorsque le programme est exécuté par un dispositif électronique, comprend :
un processeur, et
une mémoire pour stocker des instructions exécutables par processeur,
dans lequel le processeur est configuré pour exécuter les instructions exécutables, amener le dispositif électronique à mettre en œuvre le procédé de traitement d'informations selon l'une quelconque des revendications 1 à 8.

11. Un support de stockage lisible par ordinateur sur lequel est stocké un programme exécutable, dans lequel le programme exécutable, lorsqu'il est exécuté par un processeur, met en œuvre un procédé de traitement d'informations selon l'une quelconque des revendications 1 à 8.
